# EUROPÄISCHE PATENTSCHRIFT

(11) **EP 2 258 178 B1**
(45) Veröffentlichungstag und Bekanntmachung des Hinweises auf die Patenterteilung: **04.07.2012**
(21) Anmeldenummer: 10177898.3
(22) Anmeldetag: 22.04.2005
(51) Int. Cl.: A01N 43/56, A01N 25/30, A01N 37/18

(54) **Verwendung von Alkylcarbonsäureamiden als Penetrationsförderer**
Use of alkykl carboxylic acid amides as penetration promoters
Utilisation de carboxamides en tant qu'agents favorisant la pénétration

(30) Priorität: 27.04.2004 DE 102004020840
(43) Veröffentlichungstag der Anmeldung: 08.12.2010
(62) Teilanmeldung aus: 05732349.5
(73) Patentinhaber: Bayer CropScience AG, 40789 Monheim (DE)
(72) Erfinder: Röchling, Andreas, 40764 Langenfeld (DE); Reizlein, Karl, 40789 Monheim (DE); Baur, Peter, 86938 Schondorf (DE)

(56) Entgegenhaltungen:
- WO-A-88/02216
- WO-A-94/13140
- WO-A-03/070705
- WO-A-03/099005
- US-A- 5 741 502

## Beschreibung

Die Erfindung betrifft die Verwendung von Alkylcarbonsäuremono- und dialkylamiden in Pflanzenschutzmitteln und Pflanzenschutzmittel, die solche Verbindungen enthalten.

Aus der EP-A 0453 899 ist die Verwendung von C₅-C₁₉-Alkylcarbonsäuredimethylamiden als Kristallisationsinhibitoren für bestimmte zur Kristallisation neigende Azolfungizide, wie Tebuconazole, bekannt.

WO 03/070705 beschreibt disubstituiert Pyrazolcarboxanilide, u.a. das N-(3',4'-Dichlor-5-fluorbiphenyl-2-yl)-3-(difluormethyl)-1 -methyl-1H-pyrazol-4-carboxamid (Bixafen).

WO 94/13140 beschreibt u.a. die Verwendung von Carbonsäureamiden zur Steigerung der Effektivität von Pestiziden, nicht jedoch für den Wirkstoff N-(3',4'-Dichlor-5-fluorbiphenyl-2-yl)-3-(difluormethyl)-1-methyl-1H-pyrazol-4-carboxamid.

WO 03/099005 beschreibt Formulierungen, die unter anderem mikroverkapselte Penetrationsförderer und agrochemische Wirkstoffe, nicht jedoch N-(3',4'-Dichlor-5-fluorbiphenyl-2-yl)-3-(difluormethyl)-1-methyl-1H-pyrazol-4-carboxamid (Bixafen), enthalten.

Es wurde nun überraschend gefunden, dass sich Alkylcarbonsäureamide zur Erhöhung der Penetration von agrochemischen Wirkstoffen durch die Kutikula der Pflanze und damit zur biologischen Wirkungssteigerung von Pflanzenschutzmitteln eignen.

Gegenstand der Erfindung ist daher die Verwendung von Carbonsäureamiden der Formel (I)

R¹-CO-NR²R³ (I),

worin
- -R¹: C₃-C₁₉-Alkyl,
- R²: C₁-C₆-Alkyl und
- R³: H oder C₁-C₆-Alkyl
bedeuten,
zur Förderung der Penetration des agrochemischen Wirkstoffs N-(3',4'-Dichlor-5-fluorbiphenyl-2-yl)-3-(difluormethyl)-1-methyl-1H-pyrazol-4-carboxamid in Pflanzen.
- R¹: ist vorzugsweise eine unverzweigte oder verzweigte, gesättigte oder ungesättigte, beson- ders bevorzugt unverzweigte, gesättigte Alkylgruppe mit 5 bis 11 Kohlenstoffatomen, ganz besonders bevorzugt n-Heptyl oder n-Nonyl.
- R² und R³: sind vorzugsweise gleich oder verschieden, besonders bevorzugt gleich, eine unverzweigte oder verzweigte, besonders bevorzugt unverzweigte Alkylgruppe mit 1 bis 4 Kohlenstoffatomen, ganz besonders bevorzugt Methyl.

Besonders bevorzugte Verbindungen der Formel (I) sind daher solche der Formel (Ia)

R¹-CO-N(CH₃)₂ (Ia),

worin
- R¹: die oben angegebenen Bedeutungen hat.

Ganz besonders bevorzugt sind n-Hexansäuredimethylamid, n-Octansäuredimethylamid, n-Decansäuredimethylamid und n-Dodecansäuredimethylamid, insbesondere n-Octansäuredimethylamid und n-Decansäuredimethylamid.

Die Verbindungen der Formel (I) werden einzeln oder in Form von Gemischen eingesetzt. Bevorzugt ist neben der Verwendung von Einzelstoffen die Verwendung eines unter dem Handelsnamen Hallcomid, Genagen oder Agnique bekannten Gemisches, das durchschnittlich zu 5 % (alle Prozentzahlen geben, soweit nichts anderes angegeben ist, Gewichtsprozente an) aus Hexansäuredimethylamid, 50 % Octansäuredimethylamid, 40 % Decansäuredimethylamid und 5 % Dodecansäuredimethylamid besteht.

Die Säureamide der Formel (I) sind bekannt und kommerziell erhältlich.

Die Menge an einer oder -mehreren Verbindungen der Formel (I) bei der erfindungsgemäßen Verwendung in Pflanzenschutzmitteln kann nach Wirkstoff und Formulierungstyp in weiten Grenzen variieren.

So dienen die Säureamide der Formel (I) in einer bevorzugten Ausführungsform zusätzlich als Lösungsmittel, in einer anderen, ebenfalls bevorzugten Ausführungsform, als Additive zur Verbesserung der biologischen Wirksamkeit. Außerdem ist auch die Anwendung als Tank-Mix-Additiv, d.h. das Zusetzen zur Spritzbrühe der Formulierung und nicht als integrierter Bestandteil der Formulierung, möglich, sowie die Verwendung der Formulierung als Mischpartner zur Verbesserung der biologischen Wirksamkeit anderer Mittel durch Penetrationssteigerung. Bevorzugt haben erfindungsgemäße Pflanzenschutzmittel, d.h. Pflanzenschutzmittel, die erfindungsgemäß eine oder mehrere Säureamide (I) zur Erhöhung der Penetration des Wirkstoffs in Pflanzen enthalten, folgende Zusammensetzung:
- 1 bis 90 %, besonders bevorzugt 5 bis 50 %, an dem agrochemischen Wirkstoff N-(3',4'-Dichlor-5-fluorbiphenyl-2-yl)-3-(difluormethyl)-1-methyl-1H-pyrazol-4-carboxamid,
- 1 bis 90 %, besonders bevorzugt 5 bis 70 %, an einem oder mehreren Säureamiden der Formel (I) und
- 0 bis 98 % sonstige Zusatzstoffe.

Dienen die Säureamide der Formel (I) nicht als Lösungsmittel, sondern als reine Aditive zur Förderung der Penetration von Wirkstoffen in Pflanzen, sind sie bevorzugt in einem Anteil von 1 bis 30%, besonders bevorzugt von 5 bis 20 %, insbesondere von 5 bis 10%, in den erfindungsgemäßen Pflanzenschutzmitteln vorhanden.

Zu den in Frage kommenden Formulierungstypen gehören alle Formulierungen, die auf Pflanzen oder deren Vermehrungsgut ausgebracht werden. Die zu deren Herstellung verwendeten Verfahren sind dem Fachmann allgemein geläufig und beispielsweise beschrieben in Winnacker-Küchler, "Chemische Technologie" Band 7, C. Hanser Verlag München, 4. Aufl., 1986; J.W. van Valkenburg, "Pesticide Formulations", Marcel Dekker N.Y., 1973, K. Martens, "Spray Drying Handbook", 3rd Ed. 1979, G. Goodwin Ltd., London, oder Mollet, Grubenmann, "Formulierungstechnik", Wiley-VCH-Verlag, Weinheim, 2000.

Beispiele für Formulierungstypen sind alle die im "Manual on development and use of FAO and WHO specifications for pesticides" (FAO and WHO, 2002, appendix E) erwähnten (jeweils Verwendung der GCPF-Formulierungskodes mit englischer Abkürzung und Bezeichnung); AB Grain bait; AE Aerosol dispenser; AL Any other liquid; AP Any other powder; CF Capsule. Suspension for Seed Treatment; CG Encapsulated granule; CL Contact liquid or gel; CP Contact powder; CS Capsule suspension; DC Dispersible concentrate; DP Dustable powder; DS Powder for dry seed treatment; DT Tablet for direct application; EC Emulsifiable concentrate; ED Electrochargeable liquid; EG Emulsifiable Granule; EO Emulsion, water in oil; EP emulsifiable powder, ES Emulsion for seed treatment; EW Emulsion, oil in water; FG Fine granule; FS Flowable concentrate for seed treatment; GF Gel for Seed Treatment; GG Macrogranule; GL Emulsifiable gel; GP Flo-dust; GR Granule; GS Grease; GW Water soluble gel; HN Hot fogging concentrate; KK Combi-pack solid/liquid; KL Combi-pack liquid/liquid; KN Cold fogging concentrate; KP Combi-pack solid/solid; LA Lacquer; LS Solution for seed treatment; ME Microemulsion; MG Microgranule; OD oil dispersion, OF Oil miscible flowable concentrate/oil miscible suspension; OL Oil miscible liquid; OP Oil dispersible powder; PA Paste; PC Gel or paste concentrate; PO Pour-on; PR Plant rodlet; PS Seed coated with a pesticide; PT Pellet; RB Bait (ready for use); SA Spot-on; SC suspension concentrate, SD Suspension concentrate for direct application, SE Suspo-emulsion; SG Water soluble granule; SL Soluble concentrate; SO Spreading oil; SP Water soluble powder; SS Water soluble powder for seed treatment; ST Water soluble tablet; SU Ultra-low volume (ULV) suspension; TB Tablet; TC Technical material; TK Technical concentrate; UL Ultra-low volume (ULV) liquid; VP Vapour releasing product; WG Watcr dispersible granules; WP Wettable powder; WS Water dispersible powder for slurry seed treatment; WT Water dispersible tablet; XX Others.

Bevorzugt sind flüssige Formulierungstypen. Hierzu gehören die Formulierungstypen DC (GCPF-Formulierungskode für dispergierbares Konzentrat); EC (GCPF-Formulierungskode für Emulsionskonzentrat); EW (GCPF-Formulierungskode für Öl-in-Wasser-Emulsion); ES (GCPF-Formulierungskode für Emulsionsbeize), FS (GCPF-Formulierungskode für Mehrphasenkonzentrat zur Saatgutbehandlung), EO (GCPF-Formulierungskode für Wasser in Öl Emulsion; ME (GGPF-Formulierungskode für Mikroemulsion; SE (GCPF-Formulierungskode für Suspo-emulsion); SL (GCPF-Formulierungskode für wasserlösliches Konzentrat); CS (GCPF-Formulierungskode für Kapselsuspension) und AL (GGPF-Formulierungskode für gebrauchsfertige Flüssigformulierung, sonstige Flüssigkeiten zur unverdünnten Anwendung).

Besonders bevorzugt sind Emulsionskonzentrate (Formulierungstyp EC).

Als Zusatzstoffe, die in den erfindungsgemäßen, vorzugsweise flüssige Formulierungen enthalten sein können, kommen alle üblichen Formulierhilfsmittel in Frage, wie organische Solventien, Entschäumer, Emulgatoren, Dispergiermittel, Konservierungsmittel, Säuren und Basen, Farbstoffe, -Füllstoffe und auch Wasser.

Als Entschäumen kommen Übliche, in Formulierungen von agrochemischen Wirkstoffen vorhandene Entschäumer in Frage. Beispielhaft genannt seien Silikonöle, Dispersionen von Silikonölen, Magnesiumstearat, Phosphin- und Phosphonsäuren, insbesondere Fluowet PL 80®.

Als organische Solventien kommen neben Alkancarbonsäureamiden, wie denen der Formel (I), alle üblichen organischen. Lösungsmittel in Betracht, welche die eingesetzten agrochemischen Wirkstoffe gut lösen. Vorzugsweise genannt seien aliphatische und aromatische, gegebenenfalls halogenierte Kohlenwasserstoffe, wie Toluol, Xylol, Solvesso^{®}, Mineralöle, wie Testbenzin, Petroleum, Alkylbenzole und Spindelöl, weiterhin Tetrachlormethan, Chloroform, Methylenchlorid und Dichlormethan, außerdem Ester, wie Ethylacetat, Lactate ferner Lactone, wie Butyrolacton, außerdem Lactame, wie N-Methylpyrrolidon, N-Octylpyrrolidon, N-Dodecylpyrrolidon, N-Octylcaprolactam und N-Methylcaprolactam" γ-Butyrolacton, Dimethylformamid sowie Tributylphosphat.

Bevorzugt sind Carbonsäureamide der Formel (I). Besonders bevorzugt sind n-Octansäuredimethylamid und n-Decansäuredimethylamid sowie deren Mischungen.

Als Emulgatoren kommen übliche, in Formulierungen von agrochemischen Wirkstoffen vorhandene oberflächenative Substanzen in Frage. Beispielhaft genannt seien ethoxylierte Nonylphenole, Polyethylenglykolether von linearen Alkoholen, Endgruppen-verschlossene und nicht Endgruppen-verschlossene alkoxylierte lineare und verzweigte, gesättigte und ungesättigte Alkohole, Umsetzungsprodukte von Alkylphenolen mit Ethylenoxid und/oder Propylenoxid, Ethylenoxid- Propylenoxid-Blockcopolymere, Polyethylenglykole und Polypropylenglykole, weiterhin Fettsäureester, Endgruppen-verschlossene und nicht Endgruppen-verschlossene alkoxylierte lineare und verzweigte, gesättigte und ungesättigte Fettsäuren, Fettsäurepolyglykoletherester, Alkylsulfonate, Alkylsulfate, Arylsulfate, ethoxylierte Arylalkylphenole, wie zum Beispiel Tristyryl-phenol-ethoxylat mit durchschnittlich 16 Ethylenoxid-Einheiten pro Molekül, weiterhin ethoxylierte und propoxylierte Arylalkylphenole sowie sulfatierte oder phosphatierte Arylalkylphenol-ethoxylate bzw. -ethoxy- und -propoxylate. Besonders bevorzugt sind Tristrylphenol-alkoxylate und Fettsäurepolyglykoletherester. Ganz besonders bevorzugt sind Tristyryl-phenol-ethoxylate, Tristyryl-phenol-ethoxy-propoxylate und Ricinusölpolyglykoletherestern, jeweils einzeln oder in Mischungen. Hinzu kommen gegebenenfalls Additive, wie Tenside oder Ester von Fettsäuren, die zur Verbesserung der biologischen Wirksamkeit beitragen.

Als Dispergiermittel kommen alle üblicherweise in Pflanzenschutzmitteln für diesen Zweck eingesetzten Substanzen in Betracht. Vorzugsweise genannt seien neben den oben unter Emulgatoren genannten Beispielen natürliche und synthetische, wasserlösliche Polymere, wie Gelatine, Stärke und Cellulosederivate, insbesondere Celluloseester und Celluloseether, ferner Polyvinylalkohol, Polyvinylpyrrolidon, Polyacrylsäure, Polymethacrylsäure und Co-Polymerisate aus (Meth)acrylsäure und (Meth)acrylsäureestern, und außerdem auch mit Alkalimetallhydroxid neutralisierte Co-Polymerisate aus Methacrylsäure und Methacrylsäureester.

Als Konservierungsmittel kommen alle üblicherweise für diesen Zweck in Pflanzenbehandlungsmitteln vorhandenen Substanzen in Betracht. Als Beispiele genannt seien Preventol^{®} und Proxel^{®}.

Als Farbstoffe kommen alle für die Herstellung von Pflanzenschutzmitteln üblichen anorganischen oder organischen Farbstoffe in Frage. Beispielhaft genannt seien Titandioxid, Farbruß, Zinkoxid und Blaupigmente.

Als Füllstoffe kommen alle üblicherweise für diesen Zweck in Pflanzenschutzmitteln eingesetzten Substanzen in Betracht. Vorzugsweise genannt seien anorganische Partikel, wie Carbonate, Silikate und Oxide mit einer mittleren Teilchengröße von 0,005 bis 5 µm, besonders bevorzugt von 0,02 bis 2 µm. Beispielhaft erwähnt seien Siliziumdioxid, sogenannte hochdisperse Kieselsäure, Kieselgele, sowie natürliche und synthetische Silikate und Alumosilikate.

Als Verbindungen, die als Emulsions-Stabilisatoren und/oder Kristallisationsinhibitoren wirken, kommen alle üblicherweise für diesen Zweck in Pflanzenschutzmitteln eingesetzte Substanzen in Betracht.

Der Gehalt an den einzelnen Komponenten kann in den erfindungsgemäßen Formulierungen innerhalb eines größeren Bereichs variiert werden.

Die Herstellung der erfindungsgemäßen Formulierungen erfolgt z.B. in der Weise, dass man die Komponenten in den jeweils gewünschten Verhältnissen miteinander vermischt. Handelt es sich bei dem agrochemischen Wirkstoff um eine Festsubstanz, so setzt man diesen im allgemeinen entweder in fein gemahlener Form oder in Form einer Lösung oder Suspension in einem organischen Solvens oder Wasser ein. Ist der agrochemische Wirkstoff flüssig, so erübrigt sich häufig die Verwendung eines organischen Lösungsmittels. Es ist außerdem möglich, einen festen agrochemischen Wirkstoff in Form einer Schmelze einzusetzen.

Die Temperaturen können bei der Durchführung des Verfahrens in einem bestimmten Bereich variiert werden. Man arbeitet im allgemeinen bei Temperaturen zwischen 0°C und 80°C, vorzugsweise zwischen 10°C und 60°C.

Bei der Durchführung des erfindungsgemäßen Verfahrens geht man im Allgemeinen so vor, dass man die Säureamide (1) mit einem oder mehreren Wirkstoffen sowie gegebenenfalls mit Zusatzstoffen vermischt. Die Reihenfolge, in der die Komponenten miteinander vermischt werden, ist beliebig.

Zur Durchführung des erfindungsgemäßen Verfahrens kommen übliche Geräte in Betracht, die zur Herstellung von agrochemischen Formulierungen eingesetzt werden.

Als Applikationsformen können alle, dem Fachmann als gebräuchlich bekannten Verfahren verwendet werden; beispielsweise genannt seien: Spritzen, Tauchen, Nebeln sowie eine Reihe spezieller Verfahren zur direkten unter- oder oberirdischen Behandlung von gesamten Pflanzen oder Teilen (Saatgut, Wurzel, Stolonen, Stängel, Stamm, Blatt), wie beispielsweise Stamminjektion bei Bäumen oder Stängelbandagen bei perennierenden Pflanzen, und eine Reihe spezieller indirekter Applikationsverfahren.

Die jeweilige flächen- und/oder objektbezogene Aufwandmenge der Pflanzenschutzmittel unterschiedlichster Formulierungstypen zur Bekämpfung der genannten Schadorganismen variiert sehr stark. Im Allgemeinen werden hierfür die, dem Fachmann als gebräuchlich für das jeweilige Einsatzgebiet bekannten Applikationsmedien in den gebräuchlichen Mengen eingesetzt; wie beispielsweise von mehreren hundert Liter Wasser pro Hektar bei Standard-Spritzverfahren über wenige Liter Öl pro Hektar bei der 'Ultra Low Volume'-Flugzeugapplikation bis hin zu wenigen Millilitern einer physiologischen Lösungen bei Injektionsverfahren. Die Konzentrationen der erfindungsgemäßen Pflanzenschutzmittel in den entsprechenden Applikationsmedien variieren daher in einem weiten Bereich und sind vom jeweiligen Einsatzgebiet abhängig. Im Allgemeinen werden Konzentrationen verwendet, die dem Fachmann als gebräuchlich für das jeweilige Einsatzgebiet bekannt sind. Bevorzugt sind Konzentrationen von 0,01 Gew.% bis 99 Gew.%, besonders bevorzugt von 0,1 Gew.% bis 90 Gew.%.

Die erfindungsgemäßen agrochemischen Formulierungen können z.B. in den für Flüssigpräparate üblichen Zubereitungsformen entweder als solche oder nach vorherigem Verdünnen mit Wasser ausgebracht werden, also z.B. als Emulsionen, Suspensionen oder Lösungen. Die Anwendung erfolgt dabei nach üblichen Methoden, also z.B. durch Verspritzen, Gießen oder Injizieren.

Die Aufwandmenge an den erfindungsgemäßen agrochemischen Formulierungen kann innerhalb eines größeren Bereiches variiert werden. Sie richtet sich nach den jeweiligen agrochemischen Wirkstoffen und nach deren Gehalt in den Formulierungen.

Weiterhin Gegenstand der Erfindung ist ein Verfahren zur Förderung der Penetration agrochemische Wirkstoffe in Pflanzen, wobei man den agrochemischen Wirkstoff gleichzeitig oder sequentiell mit einem oder mehreren Säureamiden der Formel (I) auf die Pflanze aufbringt.

Die Pflanzenschutzmittel gemäß der Erfindung sind teilweise bekannt und teilweise neu.

Gegenstand der Erfindung ist auch ein Pflanzenschutzmittel, enthaltend
a) 1 bis 80% an einer oder mehreren Säureamiden der Formel (I) wie oben angegeben,
b) 1 bis 90% an dem agrochemischen Wirkstoff N-(3',4'-Dichlor-5-fluorbiphenyl-2-yl)-3-(difluormethyl)-1-methyl-1H-pyrazol-4-carboxamid und
c) 0 bis 98% an Zusatzstoffen,

Gegenstand der Erfindung ist auch ein Pflanzenschutzmittel, enthaltend
a) 1 bis 30 %, vorzugsweise 5 bis 20 %, besonders bevorzugt 5 bis 10 %, an einem oder mehreren Säureamiden der Formel (I) wie oben angegeben,
b) 1 bis 90 % an dem agrochemischen Wirkstoff N-(3',4'-Dichlor-5-fluorbiphenyl-2-yl)-3-(difluormethyl)-1-methyl-1H-pyrazol-4-carboxamid und
c) 0 bis 98 % an Zusatzstoffen.

Was den Schutz von Kulturpflanzen durch Applikation von dem Fungizid betrifft, ist die Anwendung in wirtschaftlich bedeutenden, beispielsweise auch transgenen Kulturen von Nutz- und Zierpflanzen, z.B. von Getreide, wie Weizen, Gerste, Roggen, Hafer, Hirse, Reis, Maniok und Mais, oder auch Kulturen von Erdnuss, Zuckerrübe, Baumwolle, Soja, Raps, Kartoffel, Tomate, Erbse und anderen Gemüsesorten bevorzugt.

Die Erfindung wird durch die Beispiele näher erläutert ohne sie darauf zu beschränken.

### Beispiele

### Penetrationstest

In diesem Test wurde die Penetration von Wirkstoffen durch enzymatisch isolierte Kutikeln von Apfelbaumblättern gemessen.

Verwendet wurden Blätter, die in voll entwickelte Zustand von Apfelbäumen der Sorte Golden Delicious abgeschnitten wurden, Die Isolierung der Kutikeln erfolgte in der Weise, dass
- zunächst auf der Unterseite mit Farbstoff markierte und ausgestanzte Blattscheiben mittels Vakuuminfiltration mit einer auf einen pH-Wert zwischen 3 und 4 gepufferten Pectinase-Lösung (0,2 bis 2 %ig) gefüllt wurden,
- dann Natriumazid hinzugefügt wurde und
- die so behandelten Blattscheiben bis zur Auflösung der ursprünglichen Blattstruktur und zur Ablösung der nicht zellulären Kutikula stehen gelassen wurden.

Danach wurden nur die von Spaltöffnungen und Haaren freien Kutikeln der Blattoberseiten weiter verwendet. Sie wurden mehrfach abwechselnd mit Wasser und einer Pufferlösung vom pH-Wert 7 gewaschen. Die erhaltenen sauberen Kutikel wurden schließlich auf Teflonplättchen aufgezogen und mit einem schwachen Luftstrahl geglättet und getrocknet.

Im nächsten Schritt wurden die so gewonnenen Kutikelmembranen für Membran-Transport-Untersuchungen in Diffusionszellen (= Transportkammern) aus Edelstahl eingelegt. Dazu wurden die Kutikeln mit einer Pinzette mittig auf die mit Silikonfett bestrichenen Ränder der Diffusionszellen plaziert und mit einem ebenfalls gefetteten Ring verschlossen. Die Anordnung war so gewählt worden, dass die morphologische Außenseite der Kutikeln nach außen, also zur Luft, gerichtet war, während die ursprüngliche Innenseite dem Inneren der-Diffusionszelle zugewandt war. Die Diffusionszellen waren mit Wasser bzw. mit einem Gemisch aus Wasser und Lösungsmittel gefüllt.

Zur Bestimmung der Penetration wurden jeweils 9 µl einer Spritzbrühe der in den Beispielen genannten Zusammensetzung auf die Außenseite einer Kutikula appliziert.

In den Spritzbrühen wurde jeweils CIPAC-Wasser verwendet.

Nach dem Auftragen der Spritzbrühen ließ man jeweils das Wasser verdunsten, drehte dann jeweils die Kammern um und stellte sie in thermostatisierte Wannen, wobei auf die Außenseite der Kutikula Luft mit einer definierten Temperatur und Luftfeuchtigkeit geblasen wurde. Die einsetzende Penetration fand daher bei einer relativen Luftfeuchtigkeit von 60 % und einer eingestellten Temperatur von 25°C statt. Die Wirkstoffpenetration wurde mit radioaktiv markiertem Wirkstoff gemessen.

Wie anhand der in der Tabelle aufgeführten Beispiele zu erkennen ist, führt die Anwesenheit von Säureamiden (hier als Beispiel Decansäuredimethylamid) zu einer beträchtlichen Aufnahmesteigerung gegenüber den Formulierungen, bei denen die Säureamiden nicht vorhanden sind. Bei den eingesetzten Alternativen zum Säureamid handelt es sich um Beispiel von handelsüblichen Lösungsmitteln für Formulierungen.

### Tabelle, Beispiel 1:

Der Wirkstoff wird in einem Aceton / Wasser-Gemisch mit einer Konzentration von 0,5 g/l gelöst und die Penetration nach 3 und 48 Stunden gemessen.

### Tabelle, Beispiel 2:

Der Wirkstoff wird zusammen mit Formulierhilfsmitteln und Decansäuredimethylamid vermischt und diese Mischung mit Wasser verdünnt, so dass die Verdünnung auch wieder eine Wirkstoffkonzentration von 0,5 g/l enthält. Wie in Bsp. 1 wurde dann die Penetration nach 3 und 48 Stunden gemessen.

### Tabelle, Beispiel 3:

Der Wirkstoff wird zusammen mit Formulierhilfsmitteln und N-Methyl-pyrrolidone vermischt und diese Mischung mit Wasser verdünnt, so dass die Verdünnung eine Wirkstoffkonzentration von 0,5 g/l enthält. Die Penetration wurde nach 3 und 48 Stunden gemessen.

### Tabelle, Beispiel 4:

Der Wirkstoff wird zusammen mit Formulierhilfsmitteln und γ-Butyrolactone vermischt und diese Mischung mit Wasser verdünnt, so dass die Verdünnung eine Wirkstoffkonzentration von 0,5 g/l enthält. Die Penetration wurde nach 3 und 48 Stunden gemessen.

### Tabelle, Beispiel 5:

Der Wirkstoff wird zusammen mit Formulierhilfsmitteln und Decansäuredimethylamid vermischt und diese Mischung mit Wasser verdünnt, so dass die Verdünnung eine Wirkstoffkonzentration von 1,0 g/l enthält. Wie in Bsp. 1 wurde dann die Penetration nach 3 und 48 Stunden gemessen.

### Tabelle, Beispiel 6:

Der Wirkstoff wird zusammen mit Formulierhilfsmitteln und N-Methyl-pyrrolictone vermischt und diese Mischung mit Wasser verdünnt, so dass die Verdünnung eine Wirkstoffkonzentration von 1,0 g/l enthält. Die Penetration wurde nach 3 und 48 Stunden gemessen.

### Tabelle. Beispiel 7:

Der Wirkstoff wird zusammen mit Formulierhilfsmitteln und γ-Butyrolactone vermischt und diese Mischung mit Wasser verdünnt, so dass die Verdünnung eine Wirkstoffkonzentration von 1,0 g/l enthält. Die Penetration wurde nach 3 und 48 Stunden gemessen.

### Tabelle. Beispiel 8:

Die Wirkstoffe Prothioconazole und Tebuconazole werden zusammen mit Formulierhilfsmitteln und Decansäuredimethylamid vermischt und diese Mischung mit Wasser verdünnt, so dass die Verdünnung eine Prothioconazole-Konzentration von 0,5 g/l enthält. Die Penetration wurde nach 3 und 48 Stunden gemessen.

### Tabelle. Beispiel 9:

Die Wirkstoffe Prothioconazole und Tebuconazole werden zusammen mit Formulierhilfsmitteln und N-Methyl-pyrrolidone vermischt und diese Mischung mit Wasser verdünnt, so dass die Verdünnung eine Prothioconazole-Konzentration von 0,5 g/l enthält. Die Penetration wurde nach 3 und 48 Stunden gemessen.

### Tabelle. Beispiel 10:

Die Wirkstoffe Prothioconazole und Tebuconazole werden zusammen mit Formulierhilfsmitteln und γ-Butyrolactone vermischt und diese Mischung mit Wasser verdünnt, so dass die Verdünnung eine Prothioconazole-Konzentration von 0,5 g/l enthält. Die Penetration wurde nach 3 und 48 Stunden gemessen.

### Tabelle. Beispiel 11:

Die Wirkstoffe Prothioconazole und Spiroxamine werden zusammen mit Formulierhilfsmitteln und Decansäuredimethylamid vermischt und diese Mischung mit Wasser verdünnt, so dass die Verdünnung eine Prothioconazole-Konzentration von 0,5 g/l enthält. Die Penetration wurde nach 3 und 48 Stunden gemessen.

### Tabelle, Beispiel 12:

Die Wirkstoffe Prothioconazole und Spiroxamine werden zusammen mit Formulierhilfsmitteln und N-Methyl-pyrrolidone vermischt und diese Mischung mit Wasser verdünnt, so dass die Verdünnung eine Prothioconazole-Konzentration von 0,5 g/l enthält. Die Penetration wurde nach 3 und 48 Stunden gemessen.

### Tabelle. Beispiel 13:

Die Wirkstoffe Prothioconazole und Spiroxamine werden zusammen mit Formulierhilfsmitteln und einem Aromatengemisch (Siedepunkt 220-290 °C) vermischt und diese Mischung mit Wasser verdünnt, so dass die Verdünnung eine Prothioconazole-Konzentration von 0,5 g/l enthält. Die Penetration wurde nach 3 und 48 Stunden gemessen.

**Tabelle Penetrationstest**

| Beispiel | Lösungsmittel | Wirkstoffe | Prothioconazole-Konzentration (g/l) in der wässrigen Verdünnung | % Penetration (+/- SE) Prothioconazole | % Penetration (+/-SE) Prothioconazole |
|---|---|---|---|---|---|
| | | | | nach 3 h | nach 48 h |
| | | | | n=5-7 | n=5-7 |
| | | | | | |
| | | | | | |
| 1 Vergleichsbeispiel | Aceton (ohne weitere Formulierhilfsmittel) | Prothioconazole | 0.5 | 0.23 (0.06) | 0.72 (0.17) |
| | | | | | |
| 2 Vergleichsbeispiel | Decansäuredimethylamid | Prothioconazole | 0.5 | 1.73 (0.45) | 6.99 (1.23) |
| 3 Vergleichsbeispiel | N-Methylpyrrolidon | Prothioconazole | 0.5 | 0.16 (0.04) | 2.23 (0.49) |
| 4 Vergleichsbeispiel | Gamma-Butyrolacton | Prothioconazole | 0.5 | 0.12 (0.04) | 1.4 (0.37) |
| | | | | | |
| 5 Vergleichsbeispiel | Decansäuredimethylamid | Prothioconazole | 1.0 | 1.24 (0.34) | 6.82 (1,63 |
| 6 Vergleichsbeispiel | N-Methylpyrrolidon | Prothioconazole | 1.0 | 0.18 (0.03) | 1.57 (0.45) |
| 7 Vergleichsbeispiel | Gamma-Butyrolacton | Prothioconazole | 1.0 | 0.09 (0.03) | 2.38 (1.29) |
| | | | | | |
| 8 Vergleichsbeispiel | Decansäuredimethylamid | Prothioconazole & Tebuconazole | 0.5 | 13,13 (1.96) | 38.17 (6.78) |
| 9 Vergleichsbeispiel | N-Methylpyrrolidon | Prothioconazole & Tebuconazole | 0.5 | 0.74 (0.12) | 13.42 (1.36) |
| 10 Vergleichsbeispiel | Gamma-Butyrolacton | Prothioconazole & Tebuconazole | 0.5 | 0.67 (0.19) | 13.9 (2.48) |
| | | | | | |
| 11 Vergleichsbeispiel | Decansäuredimethylamid | Prothioconazole & Spiroxamine | 0.5 | 8.08 (0.01) | 28.69 (3.51) |
| 12 Vergleichsbeispiel | N-Methylpyrrolidon | Prothioconazole & Spiroxamine | 0.5 | 1.62 (0.28) | 17.79 (3.7) |
| 13 Vergleichsbeispiel | Aromatengemisch (*1) | Prothioconazole & Spiroxamine | 0.5 | 0.84 (0.3) | 10.15 (4.59) |
| | | | | nach 1-1.5 h | nach 22h |
| | | | | n =5-7 | n= 5-7 |
| 14 Vergleichsbeispiel | Wirkstoff (ohne Testsubstanz) | Thidiazuron | 0.5 | <1 | <1 |
| 15 Vergleichsbeispiel | Octan-/Decansäuredimethylamid**(3 g/l) | Thidiazuron | 0.5 | 37.7 | 43.1 |
| 16 Vergleichsbeispiel | Hasten*** (2 g/l) | Thidiazuron | 0.5 | 8.0 | 27.0 |
| 17 Vergleichsbeispiel | Hasten (10 g/l) | Thidiazuron | 0.5 | 12.6 | 39.2 |
| 18 Vergleichsbeispiel | Agridex**** (10 g/l) | Thidiazuron | 0.5 | 1.44 | 46.6 |

| Beispiel | Formulierung/Testsubstanz in Spritzbrühe (g/l) | Wirkstoffe | BYF587-Konzentration (g/l) in der wäßrigen Verdünnung | % Penetration BYF587 | % Penetration BYF587 |
|---|---|---|---|---|---|
| | | | | nach 7h | nach 26h |
| | | | | n-5-7 | n = 5-7 |
| 19 | SC100 | N-(3'4'-Dichlor-5-fluorbiphenyl-2-yl)-3-(difluormethyl)-1-methyl-1H-Pyrazol-4-carboxamid | 0.25 | 0.8 | 1.6 |
| 20 | EC200/ Decansäuredimethylamid** (0.5 g/l) | N-(3'4'-Dichlor-5-fluarbiphenyl-2-yl)-3-(difluormetyl)-1-methyl-1H-pyrazol-4-carboxamid | 0.25 | 25.7 | 40.7 |
| 21 | EC200 /Decansäuredimethylamid**(1.5 g/l) | N-(3'4'-Dichlor-5-fluorbiphenyl-2-yl)-3-(difluormethyl)-1-methy)-1H-pyrazol-4-carboxamid | 0.25 | 38.9 | 54.3 |
| | | | | | |

| | | | | | |
|---|---|---|---|---|---|
| (*1): Siedepunkt 220 - 290 °C ** Hallcomid M8-10 *** Kommerzielles Tankmix-Additiv mit Ethyl/Methylester von Ölsäure als Hauptbestandteil **** Kommerzielles Tankmix-Additiv, Mineralölkonzentrat ** Hallcomid M8- 10 | | | | | |

## Patentansprüche

1. Verwendung von Carbonsäureamiden der Formel (I)
R¹-CO-NR²R³ (I)
worin
R¹ C₃-C₁₉-Alkyl,
R² C₁-C₆-Alkyl und
R³ H oder C₁-C₆-Alkyl
bedeuten,
zur Förderung der Penetration des agrochemischen Wirkstoffs N-(3',4'-Dichlor-5-fluorbiphenyl-2-yl)-3-(difluormethyl)-1-methyl-1H-pyrazol-4-carboxamid in Pflanzen.

2. Verwendung gemäß Anspruch 1, wobei die Symbole in Formel (I) folgende Bedeutungen haben:
R¹ ist eine unverzweigte, gesättigte Alkylgruppe mit 5 bis 11 Kohlenstoffatomen und
R², R³ sind Methyl.

3. Verwendung gemäß Anspruch 1 oder 2, wobei das Säureamid der Formel (I) n-Octansäuredimethylamid und/oder n-Decansäuredimethylamid ist.

4. Verwendung gemäß Anspruch 1 wobei als Säureamide eine Mischung aus durchschnittlich 5% Hexansäuredimethylamid, 50% Octansäuredimethylamid, 40% Decansäuredimethylamid und 5% Dodecansäuredimethylamid eingesetzt wird.

5. Verwendung gemäß einem oder mehreren der Ansprüche 1 bis 4 wobei man das Säureamid in einem Pflanzenschutzmittel, enthaltend
- 1 bis 90%, besonders bevorzugt 5 bis 50%, an dem agrochemischen Wirkstoff N-(3',4-Dichlor-5-fluorbiphenyl-2-yl)-3-(difluormethyl)-1-methyl-1H-pyrazol-4-carboxamid,
- 1 bis 90%, besonders bevorzugt 5 bis 70%, an einem oder mehreren Säureamiden der Formel (I) und
- 0 bis 98% an Zusatzstoffen, einsetzt.

6. Verwendung gemäß einem oder mehren der Ansprüche 1 bis 4, wobei das oder die Säureamide einer wässrigen Spritzbrühe zugesetzt werden.

7. Verfahren zur Förderung der Penetration agrochemischer Wirkstoffe in Pflanzen, wobei man den agrochemischen Wirkstoff N-(3',4'-Dichlor-5-fluorbiphenyl-2-yl)-3-(difluormethyl)-1-methyl-1H-pyrazol-4-carboxamid gleichzeitig oder sequentiell mit einem oder mehreren Säureamiden der Formel (I) gemäß Anspruch 1 auf die Pflanzen aufbringt.

8. Pflanzenschutzmittel, enthaltend
a) 1 bis 80% an einer oder mehreren Säureamiden der Formel (I) wie oben angegeben,
b) 1 bis 90% an dem agrochemischen Wirkstoff N-(3',4'-Dichlor-5-fluorbiphenyl-2-yl)-3-(difluormethyl)-1-methyl-1H-pyrazol-4-carboxamid, und
c) 0 bis 98% an Zusatzstoffen.

9. Pflanzenschutzmittel gemäß Anspruch 8, enthaltend
a) 1 bis 30% an einem oder mehreren Säureamiden der Formel (I) gemäß Anspruch 1,
b) 1 bis 90% an dem agrochemischen Wirkstoff N-(3',4'-Dichlor-5-fluorbiphenyl-2-yl)-3-(difluormethyl)-1-methyl- 1H-pyrazol-4-carboxamid und
c) 0 bis 98% an Zusatzstoffen.

## Claims

1. Use of carboxamides of the formula (I)
R¹-CO-NR²R³ (I)
in which
R¹ represent C₃-C₁₉-alkyl,
R² represents C₁-C₆-alkyl and
R³ represents H or C₁-C₆-alkyl
for promoting the penetration of the agrochemical active substance N-(3',4'-dichloro-5-fluorobiphenyl-2-yl)-3-(difluororomethyl)-1-methyl-1H-pyrazole-4-carboxamide into plants.

2. Use according to Claim 1, the symbols in formula (I) having the following meanings:
R¹ is an unbranched, saturated alkyl group having 5 to 11 carbon atoms and
R², R³ are methyl.

3. Use according to Claim 1 or 2, the acid amide of the formula (I) being N,N-dimethyl n-octanamide and/or N,N-dimethyl n-decanamide.

4. Use according to Claim 1, the acid amides employed being a mixture of on average 5% N,N-dimethyl hexanamide, 50% N,N-dimethyl octanamide, 40% N,N-dimethyl decanamide and 5% N,N-dimethyl dodecanamide.

5. Use according to one or more of Claims 1 to 4, the acid amide being employed in a plant protection composition comprising
- 1 to 90%, especially preferably 5 to 50%, of the agrochemical active substance N-(3',4'-dichloro-5-fluorobiphenyl-2-yl)-3-(difluoromethyl)-1-methyl-1H-pyrazole-4-carboxamide,
- 1 to 90%, especially preferably 5 to 70%, of one or more acid amides of the formula (I) and
- 0 to 98% of other additives.

6. Use according to one or more of Claims 1 to 4, the acid amide(s) being added to an aqueous spray mixture.

7. Method of promoting the penetration of agrochemical active substances into plants, where the agrochemical active substance N-(3',4'-dichloro-5-fluorobiphenyl-2-yl)-3-(difluoromethyl)-1-methyl-1H-pyrazole-4-carboxamide is applied to the plants simultaneously or sequentially with one or more acid amides of the formula (I) according to Claim 1.

8. Plant protection composition comprising
a) 1 to 80% of one or more acid amides of the formula (I) as stated above,
b) 1 to 90% of the agrochemical active substance N-(3',4'-dichloro-5-fluorobiphenyl-2-yl)-3-(difluoromethyl)-1-methyl-1H-pyrazole-4-carboxamide and
c) 0 to 98% of additives.

9. Plant protection composition according to Claim 8 comprising
a) 1 to 30%, of one or more acid amides of the formula (I) according to Claim 1,
b) 1 to 90% of the agrochemical active substance N-(3',4'-dichloro-5-fluorobiphenyl-2-yl)-3-(difluoromemyl)-1-methyl-1H-pyrazole-4-carboxamide and
c) 0 to 98% of additives.

## Revendications

1. utilisation d'amides d'acides carboxyliques de formule (I)
R¹-CO-NR²R³ (I)
dans laquelle
R¹ signifie alkyle en C₃-C₁₉,
R² signifie alkyle en C₁-C₆ et
R³ signifie H ou allyle en C₁-C₆,
pour favoriser la pénétration de l'agent actif agrochimique N-(3',4'-dichloro-5-fluorobiphényl-2-yl)-3-(difluorométhyl) -1-méthyl-1H-pyrazol-4-carboxamide dans des plantes.

2. Utilisation selon la revendication 1, dans laquelle les symboles dans la formule (I) ont les significations suivantes :
R¹ est un groupe alkyle saturé non ramifié de 5 à 11 atomes de carbone et
R², R³ sont méthyle.

3. Utilisation selon la revendication 1 ou 2, dans laquelle l'amide d'acide de formule (I) est le diméthylamide de l'acide n-octanoïque et/ou le diméthylamide de l'acide n-décanoïque.

4. Utilisation selon la revendication 1, dans laquelle un mélange constitué en moyenne de 5 % de diméthylamide de l'acide hexanoïque, 50 % de diméthylamide de l'acide octanoïque, 40 % de diméthylamide de l'acide décanoïque et 5 % de diméthylamide de l'acide dodécanoïque est utilisé en tant qu'amides d'acides.

5. Utilisation selon une ou plusieurs des revendications 1 à 4, dans laquelle l'amide d'acide est utilise dans un agent phytosanitaire contentant :
- 1 à 90 %, de manière particulièrement préférée 5 à 50 %, de l'agent actif agrochimique N-(3',4'-dichloro-5-fluorobiphényl-2-yl)-3-(difluorométhyl)-1-méthyl-1H-pyrazol-4-carboxamide,
- 1 à 90 %, de manière particulièrement préférée 5 à 70 %, d'un, ou de plusieurs amides d'acides de formule (I), et
- 0 à 98 % d'additifs.

6. Utilisation selon une ou plusieurs des revendications 1 à 4, dans laquelle le ou les amides d'acides sont ajoutés à un mélange de pulvérisation aqueux.

7. Procédé pour favoriser la pénétration d'agents actifs agrochimiques dans des plantes, l'agent actif agrochimique N-(3',4'-dichloro-5-fluorobiphényl-2-yl)-3-(difluorométhyl)-1-méthyl-1H-pyrazol-4-carboxamide état appliqué sur les plantes simultanément ou successivement avec un ou plusieurs amides d'acides de formule (I) selon la revendication 1.

8. Agent phytosanitaire, contentant
a) 1 à 80 % d'un ou de plusieurs amides d'acides de formule (I) telle que spécifiée précédemment,
b) 1 à 90 % de l'agent actif agrochimique N-(3',4'-dichloro-5-fluorobiphényl-2-yl)-3-(difluorométhyl)-1-méthyl-1H-pyrazol-4-carboxamide, et
c) 0 à 98% d'additifs.

9. Agent phytosanitaire selon la revendication 8, contenant :
a) 1 à 30 % d'un ou de plusieurs amides d'acides de formule (I) selon la revendication. 1,
b) 1 à 90 % de l'agent actif agrochimique N-(3',4'-dichloro-5-fluorobiphényl-2-yl)-3-(difluorométhyl)-1-méthyl-1H-pyrazol-4-carboxamide, et
c) 0 à 98% % d'additifs.
